# EUROPEAN PATENT APPLICATION

(11) **EP 4 787 967 A1**
(43) Date of publication of application: **05.08.2026**
(21) Application number: 23954393.7
(22) Date of filing: 29.09.2023
(51) Int. Cl.: H04W 36/14, H04W 36/30, H04W 36/36, H04W 36/38, H04W 88/10

(54) **TERMINAL, NETWORK DEVICE, WIRELESS COMMUNICATION SYSTEM, AND WIRELESS COMMUNICATION METHOD**

(71) Applicant: NTT DOCOMO, INC., Tokyo 100-6150 (JP)
(72) Inventor: SHIMA Kousuke, Tokyo 100-6150 (JP); OKAMURA Masaya, Tokyo 100-6150 (JP); MATSUMURA Yuki, Tokyo 100-6150 (JP); ECHIGO Haruhi, Tokyo 100-6150 (JP)
(74) Representative: Hoffmann Eitle
(86) International application number: PCT/JP2023/035773
(87) International publication number: WO 2025/069427

(57) **Abstract**

A terminal comprises a communication unit that executes communication with a first network and a second network, and a control unit that determines an execution of communication with respect to the second network when a specific condition regarding at least one of a congestion situation and a quality situation of the first network is satisfied.

## Description

### TECHNICAL FIELD

The present disclosure relates to a terminal, a network apparatus, a radio communication system, and a radio communication method supporting connection to two or more networks.

### BACKGROUND ART

### The 3rd Generation

Partnership Project (3GPP: registered trademark) has specified the 5th generation mobile communication
system (also referred to as 5G, New Radio (NR), or Next Generation (NG)).

Furthermore, the 3GPP is also proceeding with the specification of the next generation called Beyond 5G, 5G Evolution, or 6G.

Here, as a use case of 5G, a use case such as Ultra-Reliable and Low Latency Communications (URLLC) is assumed (Non-Patent Literature 1).

### CITATION LIST

### NON-PATENT LITERATURE

Non-Patent Literature 1: NTT DOCOMO, "DOCOMO 6G White Paper, Version 5.0", [online], September 2023, Internet <URL:https://www.docomo.ne.jp/binary/pdf/corporate/technology/whitepaper_6g/D OCOMO_6G_White_PaperJP_20221116.pdf>

### SUMMARY OF INVENTION

Incidentally, in a cellular network using a public line network, a best effort type service is generally provided. Therefore, in an environment where terminals are dense (e.g., a concert), if traffic of the terminals increases explosively, a minimum communication quality cannot be guaranteed, and a situation may occur in which the terminal cannot originate a call.

Similarly, even when a mission-critical communication service such as URLLC is assumed, a situation may occur in which a minimum communication quality (e.g., throughput, delay, the number of simultaneous connections, etc.) cannot be guaranteed if traffic related to the mission-critical communication service increases.

Therefore, the present disclosure has been made to solve the above-described problem, and an object of the present disclosure is to provide a terminal, a network apparatus, a radio communication system, and a radio communication method capable of improving a guarantee of a minimum communication quality.

An aspect of the disclosure is a terminal comprising: a communication unit that executes communication with a first network and a second network; and a control unit that determines an execution of communication with respect to the second network when a specific condition regarding at least one of a congestion situation and a quality situation of the first network is satisfied.

An aspect of the disclosure is a network apparatus comprising: a control unit that determines an execution of communication between a second network and a terminal when a specific condition regarding at least one of a congestion situation and a quality situation of a first network is satisfied; and a transmission unit that transmits an instruction or a request for the execution of the communication between the second network and the terminal to the second network or the terminal.

An aspect of the disclosure is a radio communication system comprising: a terminal that executes communication with a first network and a second network; and a network apparatus that executes communication with the terminal or the second network, wherein at least one of the terminal and the network apparatus comprises a control unit that determines an execution of communication between the second network and the terminal when a specific condition regarding at least one of a congestion situation and a quality situation of the first network is satisfied.

An aspect of the disclosure is a radio communication system comprising: a terminal; and a base station that executes communication with the terminal via a first network or a second network, wherein at least one of the terminal and the base station comprises a control unit that determines an execution of communication between the second network and the terminal when a specific condition regarding at least one of a congestion situation and a quality situation of the first network is satisfied.

An aspect of the disclosure is a radio communication method comprising: a step of executing communication with a first network and a second network; and a step of determining an execution of communication with respect to the second network when a specific condition regarding at least one of a congestion situation and a quality situation of the first network is satisfied.

### BRIEF DESCRIPTION OF DRAWINGS

[Fig. 1] Fig. 1 is an overall schematic configuration diagram of a radio communication system 10.
[Fig. 2] Fig. 2 is a diagram illustrating a frequency range used in a cellular network.
[Fig. 3] Fig. 3 is a diagram illustrating a configuration example of a radio frame, a subframe, and a slot used in a cellular network.
[Fig. 4] Fig. 4 is a functional block configuration diagram of a UE 200.
[Fig. 5] Fig. 5 is a functional block configuration diagram of a network apparatus 50.
[Fig. 6] Fig. 6 is a diagram for explaining operation example 3.
[Fig. 7] Fig. 7 is a diagram for explaining operation example 3.
[Fig. 8] Fig. 8 is a diagram for explaining operation example 3.
[Fig. 9] Fig. 9 is a diagram for explaining operation example 3.
[Fig. 10] Fig. 10 is a diagram for explaining operation example 4.
[Fig. 11] Fig. 11 is a diagram for explaining operation example 4.
[Fig. 12] Fig. 12 is a diagram for explaining operation example 4.
[Fig. 13] Fig. 13 is a diagram for explaining operation example 4.
[Fig. 14] Fig. 14 is a diagram for explaining operation example 4.
[Fig. 15] Fig. 15 is a diagram for explaining operation example 4.
[Fig. 16] Fig. 16 is a diagram for explaining operation example 5.
[Fig. 17] Fig. 17 is a diagram for explaining operation example 5.
[Fig. 18] Fig. 18 is a diagram for explaining operation example 5.
[Fig. 19] Fig. 19 is a diagram for explaining operation example 5.
[Fig. 20] Fig. 20 is a diagram for explaining operation example 5.
[Fig. 21] Fig. 21 is a diagram illustrating an example of a hardware configuration of a gNB 100 and a UE 200.
[Fig. 22] Fig. 22 is a diagram illustrating a configuration example of a vehicle 2001.

### DESCRIPTION OF EMBODIMENTS

Hereinafter, embodiments will be described based on the drawings. Note that the same or similar reference numerals are attached to the same functions and configurations, and the description thereof will be omitted as appropriate.

### [Embodiment]

### (1) Overall Schematic Configuration of Radio Communication System

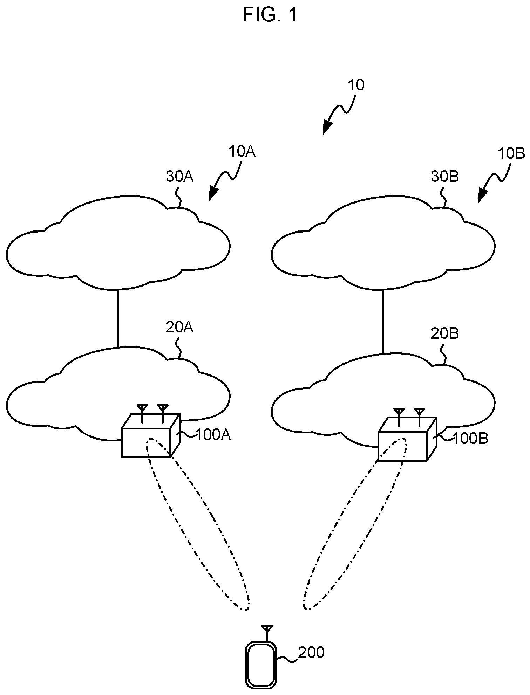

Fig. 1 is an overall schematic configuration diagram of a radio communication system 10 according to an embodiment. The radio communication system 10 includes a terminal 200 (hereinafter, UE (User Equipment) 200), a first network 10A, and a second network 10B.

The first network 10A includes a radio access network 20A and a core network 30A. The radio access network 20A includes a base station 100A that executes radio communication with the UE 200. Note that the first network 10A may not have the radio access network 20A, but may have the base station 100A. The first network 10A may not have the core network 30A. The base station 100A may be referred to as a NodeB (e.g., gNB) or may be referred to as an AP (Access Point) depending on a scheme of the first network 10A.

The second network 10B includes a radio access network 20B and a core network 30B. The radio access network 20B includes a base station 100B that executes radio communication with the UE 200. Note that the second network 10B may not have the radio access network 20B, but may have the base station 100B. The second network 10B may not have the core network 30B. The base station 100B may be referred to as a NodeB or may be referred to as an AP depending on a scheme of the second network 10B.

Here, the first network 10A and the second network 10B only need to have different radio access schemes. For example, the radio access scheme may be a radio access scheme of a cellular network referred to as 5G, Beyond 5G, 5G Evolution, or 6G, or a radio access scheme different from the radio access scheme of the cellular network (for example, a radio access scheme compliant with Wi-Fi, Bluetooth, NPN (Non-Public Network), NFC (Near Field Communication), WiMAX, UWB (Ultra-Wide Band), RFID (Radio Frequency Identification), or the like).

For example, when the radio access scheme is the radio access scheme of the cellular network, a configuration shown below may be adopted.

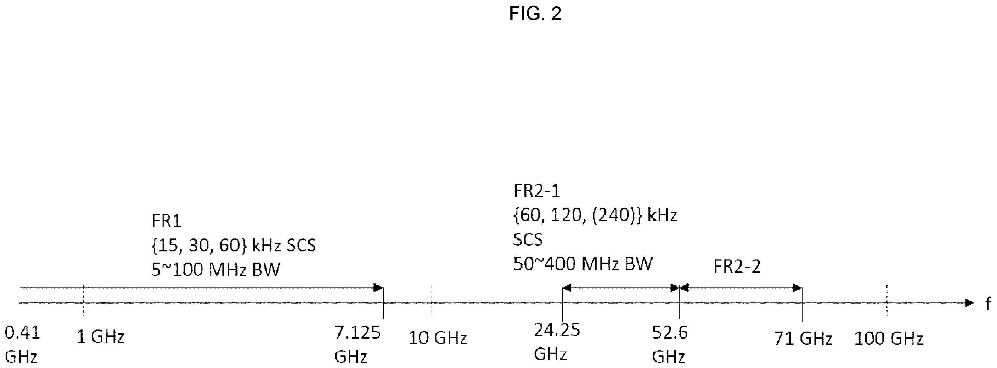

First, the cellular network may support a plurality of frequency ranges (FRs) shown in Fig. 2. For example, as shown in Fig. 2, the cellular network may support FR1 and FR2. A frequency band of each FR is as follows.
- FR1: 410 MHz to 7.125 GHz
- FR2-1: 24.25 GHz to 52.6 GHz
- FR2-2: more than 52.6 GHz to 71 GHz

In FR1, a Sub-Carrier Spacing (SCS) of 15, 30, or 60 kHz is used, and a bandwidth (BW) of 5 to 100 MHz may be used. FR2 has a higher frequency than FR1, an SCS of 60 kHz or 120 kHz (240 kHz may be included) is used, and a bandwidth (BW) of 50 to 400 MHz may be used.

Furthermore, the cellular network may support a higher frequency band than the frequency band of FR2. Specifically, the cellular network supports a frequency band exceeding 52.6 GHz and up to 71 GHz or 114.25 GHz.

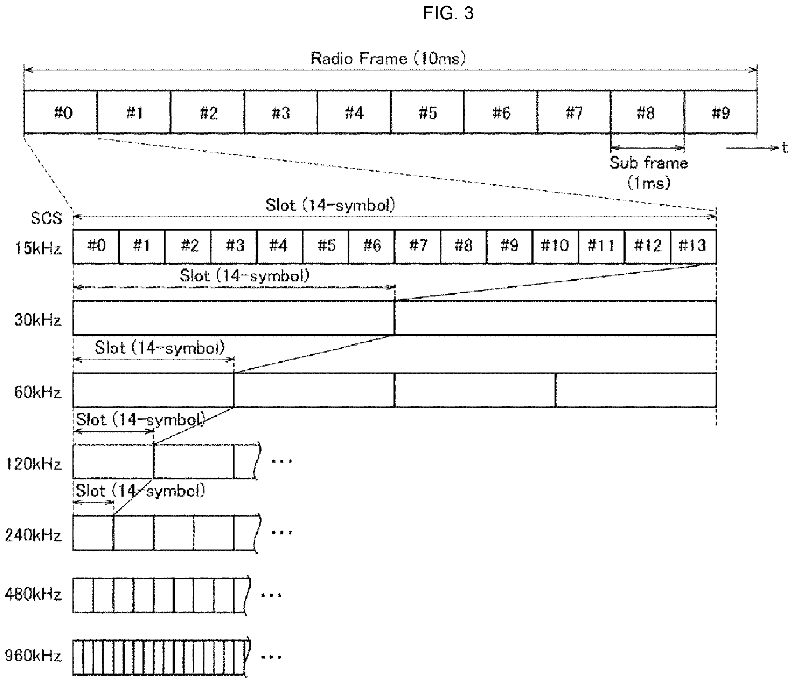

Second, the cellular network may support a radio frame, a subframe, and a slot shown in Fig. 3.

As shown in Fig. 3, one slot is configured by 14 symbols, and as the SCS becomes larger (wider), a symbol period (and a slot period) becomes shorter. As the SCS, 480 kHz, 960 kHz, or the like may be used in addition to 15 kHz, 30 kHz, 60 kHz, 120 kHz, 240 kHz, or the like.

In addition, the number of symbols configuring one slot is not necessarily 14 symbols (for example, 28 symbols or 56 symbols). Furthermore, the number of slots per subframe may differ depending on the SCS.

Note that a time direction (t) shown in Fig. 3 may be referred to as a time domain, a symbol period, or a symbol time. In addition, a frequency direction may be referred to as a frequency domain, a resource block, a subcarrier, a bandwidth part (BWP), or the like.

### (2) Functional Block Configuration of Radio Communication System

Hereinafter, a functional block configuration of the radio communication system 10 will be described.

First, a functional block configuration of the UE 200 will be described.

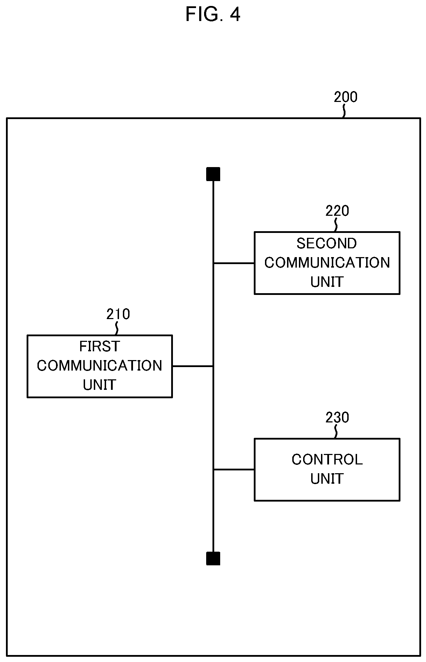

As shown in Fig. 4, the UE 200 includes a first communication unit 210, a second communication unit 220, and a control unit 230.

The first communication unit 210 executes communication with the first network 10A. The first communication unit 210 may transmit a control signal to the first network 10A, and may receive a control signal from the first network 10A. The first communication unit 210 may transmit a data signal to the first network 10A, and may receive a data signal from the first network 10A.

The second communication unit 220 executes communication with the second network 10B. The second communication unit 220 may transmit a control signal to the second network 10B, and may receive a control signal from the second network 10B. The second communication unit 220 may transmit a data signal to the second network 10B, and may receive a data signal from the second network 10B.

In the embodiment, the first communication unit 210 and the second communication unit 220 may configure a communication unit that executes communication with the first network 10A and the second network 10B.

The control unit 230 controls each block configuring the UE 200. In the embodiment, the control unit 230 may configure a control unit that determines an execution of communication with respect to the second network 10B when a specific condition regarding at least one of a congestion situation and a quality situation of the first network 10A is satisfied.

Second, a functional block configuration of the network apparatus 50 will be described. For example, the network apparatus 50 is provided in the first network 10A or the second network 10B. That is, the network apparatus 50 may be the base station 100A, or may be an apparatus provided in the core network 30A. The network apparatus 50 may be the base station 100B, or may be an apparatus provided in the core network 30B. However, the network apparatus 50 may be provided in a network different from the first network 10A and the second network 10B.

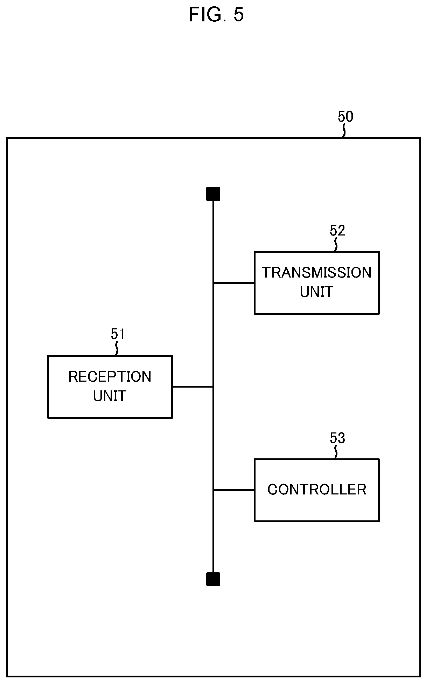

As shown in Fig. 5, the network apparatus 50 includes a reception unit 51, a transmission unit 52, and a control unit 53.

The reception unit 51 receives various signals from the UE 200, the first network 10A, or the second network 10B. The reception unit 51 may receive a control signal, and may receive a data signal. For example, when the network apparatus 50 is a gNB, the control signal may be read as a PUCCH (Physical Uplink Control Channel), and the data signal may be read as a PUSCH (Physical Uplink Shared Channel).

The transmission unit 52 transmits various signals to the first network 10A or the second network 10B. The transmission unit 52 may transmit a control signal, and may transmit a data signal. For example, when the network apparatus 50 is a gNB, the control signal may be read as a PDCCH (Physical Downlink Control Channel), and the data signal may be read as a PDSCH (Physical Downlink Shared Channel).

In the embodiment, the transmission unit 52 may configure a transmission unit that transmits an instruction or a request for the execution of the communication between the second network and the terminal to the second network 10B or the UE 200.

The control unit 130 controls each block configuring the network apparatus 50. In the embodiment, the control unit 130 may configure a control unit that determines an execution of communication with respect to the second network 10B when a specific condition regarding at least one of a congestion situation and a quality situation of the first network 10A is satisfied.

### (3) Problem

In a cellular network using a public line network, a best effort type service is generally provided. Therefore, in an environment where terminals are dense (e.g., a concert), if traffic of the terminals increases explosively, a minimum communication quality cannot be guaranteed, and a situation may occur in which the terminal cannot originate a call.

Similarly, even when a mission-critical communication service such as URLLC (Ultra-Reliable and Low Latency Communications) is assumed, a situation may occur in which a minimum communication quality (e.g., throughput, delay, the number of simultaneous connections, etc.) cannot be guaranteed if traffic related to the mission-critical communication service increases.

### (4) Operation Example

In order to solve the above-described problem, operations shown below may be executed. In the following, a case where the first network 10A is a network (e.g., a cellular network) in which a minimum communication quality should be guaranteed will be described. The second network 10B is a network to which at least a part of communication assumed in the first network 10A is off-loaded in order to guarantee the minimum communication quality in the first network 10A.

### (4.1) Operation Example 1

In operation example 1, a case where the first network 10A and the second network 10B are operated in cooperation will be described. A case where the UE 200 can establish a connection with both the first network 10A and the second network 10B will be described. In operation example 1, a case of properly using communication executable in the first network 10A and communication executable in the second network 10B will be described. As operation example 1, options shown below are conceivable.

In option 1-1, in the first network 10A, communication of a data signal (or a data channel) may be restricted, and communication of a control signal (or a control channel) may be allowed. In the second network 10B, communication of a data signal (or a data channel) and a control signal (or a control channel) may be allowed.

In such a case, the first network 10A may transmit assistance information necessary for communication in the second network 10B to the second network 10B. For example, the assistance information may include a measurement result reported from the UE 200 to the first network 10A. The measurement result may include a measurement result (RSRP (Reference Signal Received Power), RSSI (Reference Signal Strength Indicator), etc.) of the first network 10A, and may include a measurement result (RSRP, RSSI, etc.) of the second network 10B.

In option 1-2, in the first network 10A, communication of a downlink signal (or a downlink channel) may be restricted, and transmission/reception of an uplink signal (or a downlink channel) may be allowed. In the second network, communication of an uplink signal (or a downlink channel) may be restricted, and transmission/reception of a downlink signal (or a downlink channel) may be allowed.

In option 1-3, in the first network 10A, a first type of communication may be allowed, and in the second network 10B, a second type of communication may be allowed. The type of communication may be a type such as high-speed high-capacity, low-latency, massive-connection, or general-purpose. Each of the first type and the second type may include two or more types. The first type and the second type may include different types of communication, or may include the same type of communication. The type of communication included in the first type and the second type may be determined based on one or more requirement conditions satisfied by the first network 10A and the second network 10B. For example, the requirement condition may be a condition such as throughput, delay, or the number of simultaneous connections required for each of the types of communication.

In option 1-4, in the first network 10A, communication for a first purpose may be allowed, and communication for a second purpose other than the first purpose may be restricted. In the second network 10B, communication for the second purpose may be allowed. In the second network 10B, communication for the first purpose may be restricted, or communication for the first purpose may be allowed. For example, the first purpose may be a purpose such as an emergency call. The first purpose may be predetermined in the radio communication system 10, may be configured in the first network 10A, may be configured in the second network 10B, may be indicated by the first network 10A, or may be indicated by the second network 10B.

In operation example 1, two or more options selected from option 1-1 to option 1-4 may be combined.

### (4.2) Operation Example 2

In operation example 2, a case where the first network 10A and the second network 10B are operated independently will be described. The UE 200 may establish connections with both the first network 10A and the second network 10B simultaneously, or the UE 200 may establish connections with both the first network 10A and the second network 10B non-simultaneously. In operation example 2, a state in which the first network 10A and the UE 200 are communicating (or a state of being connected to the first network 10A) may be assumed, or a state in which the first network 10A and the UE 200 are not communicating (or a state of not being connected to the first network 10A) may be assumed.

In operation example 2, the UE 200 or the network apparatus 50 determines the execution of communication with respect to the second network 10B when a specific condition regarding at least one of a congestion situation and a quality situation of the first network 10A is satisfied. The execution of communication with respect to the second network 10B may include an operation of establishing a connection to the second network 10B (hereinafter, a connection establishment operation), and may include an operation of executing a part of communication assumed to be executed with the first network 10A in the second network 10B (hereinafter, a CH/signal change operation). The CH/signal change operation may include the operation of operation example 1 described above. As the specific condition, options shown below are conceivable.

In option 2-1, the specific condition may be a condition regarding a congestion situation of the first network 10A. The congestion situation may be represented by the number of UEs 200 connected to the base station 100A of the first network 10A (hereinafter, the number of connected UEs). For example, the specific condition may be that the number of connected UEs exceeds a threshold. The congestion situation may be represented by the number of UEs 200 that the base station 100A of the first network 10A can support (hereinafter, the number of capacities). For example, the specific condition may be that a ratio of the number of connected UEs to the number of capacities exceeds a threshold.

Here, the specific condition and the threshold described above may be indicated from the first network 10A or the second network 10B, or may be indicated from the UE 200 to the first network 10A or the second network 10B.

In option 2-2, the specific condition may be a condition regarding a quality state of the first network 10A. The quality state may be represented by an RSRP, or may be represented by an RSSI. For example, the specific condition may include a condition that the quality state deteriorates below a threshold.

Here, the specific condition and the threshold described above may be indicated from the first network 10A or the second network 10B, or may be indicated from the UE 200 to the first network 10A or the second network 10B.

In option 2-3, the specific condition may be a condition that a time during which communication of a signal is assumed in the first network 10A (hereinafter, an assumed time) exceeds a threshold. The assumed time may be counted by a timer. The timer may be a dedicated timer for determining the specific condition, or may be an existing timer used in the first network 10A. The existing timer may be a timer that counts a response (ACK/NACK) to a signal transmitted to the first network 10A, or may be a timer that counts a response (ACK/NACK) to a signal received from the first network 10A.

In option 2-4, the specific condition may be a condition that the execution of communication with respect to the second network 10B is indicated from the first network 10A or the second network. The indication from the first network 10A or the second network may be implicit or explicit. The implicit indication may be that communication initiated by the UE 200 is communication assumed in the second network. The communication assumed in the second network may be predetermined in the radio communication system 10, may be configured in the first network 10A, may be configured in the second network 10B, may be indicated by the first network 10A, or may be indicated by the second network 10B. Although not particularly limited, the communication assumed in the second network may be a voice call or data communication.

In option 2-5, the specific condition may be a condition that the execution of communication with respect to the second network 10B is requested from the UE 200. In such a case, the first network 10A or the second network may notify the UE 200 whether or not to permit the request of the UE 200. The request from the UE 200 may be implicit or explicit. The implicit request may be that communication initiated by the UE 200 is communication assumed in the second network. The communication assumed in the second network may be predetermined in the radio communication system 10, may be configured in the first network 10A, may be configured in the second network 10B, may be indicated by the first network 10A, or may be indicated by the second network 10B. Although not particularly limited, the communication assumed in the second network may be a voice call or data communication.

In option 2-6, in a state where the UE 200 has established connections with both the first network 10A and the second network 10B, when the execution of communication with respect to the second network 10B is determined, the UE 200 may maintain the connection of the first network 10A.

In such a case, the number of UEs 200 maintaining the connection of the first network 10A may be equal to or less than the number of capacities of the base station 100A of the first network 10A. In other words, the UEs 200 equal to or less than the number of capacities of the base station 100A of the first network 10A maintain the connection of the first network 10A, and remaining UEs 200 release the connection of the first network 10A. The UE 200 may transition a connection state according to an indication of the first network 10A, or may autonomously transition a connection state according to expiration of a timer included in the UE 200.

In option 2-7, when executing the connection establishment operation or the CH/signal change operation, the UE 200 may execute an initial access and a connection establishment operation (e.g., an RRC connection request) with respect to the second network 10B in the second network 10B.

In option 2-8, when executing the connection establishment operation or the CH/signal change operation, the UE 200 may execute an initial access and a connection establishment operation (e.g., an RRC connection request) with respect to the second network 10B in the first network 10A. In such a case, the first network 10A may transfer a signal received from the UE 200 to the second network 10B.

In operation example 2, two or more options selected from option 2-1 to option 2-8 may be combined.

In operation example 2, the specific condition may be predetermined in the radio communication system 10, may be configured in the first network 10A, may be configured in the second network 10B, may be indicated by the first network 10A, or may be indicated by the second network 10B.

In operation example 3, an interface between the first network 10A and the second network 10B will be described.

Information regarding the first network 10A may be forwarded to the second network 10B via the interface. The information regarding the first network 10A may include one or more pieces of information selected from system information broadcasted in the first network 10A, a measurement result reported from the UE 200 to the first network 10A, assistance information or assistance data necessary for communication of the second network 10B, a signal (PDCCH, PDSCH) transmitted from the first network 10A to the UE 200, and a signal (PUCCH, PUSCH) transmitted from the UE 200 to the first network 10A.

Note that the measurement result reported from the UE 200 to the first network 10A may include a measurement result (RSRP, RSSI, etc.) of the first network 10A, and may include a measurement result (RSRP, RSSI, etc.) of the second network 10B.

Information regarding the second network 10B may be forwarded to the first network 10A via the interface. The information regarding the second network 10B may include one or more pieces of information selected from system information broadcasted in the second network 10B, a measurement result reported from the UE 200 to the second network 10B, assistance information or assistance data necessary for communication of the second network 10B, a signal (PDCCH, PDSCH) transmitted from the second network 10B to the UE 200, and a signal (PUCCH, PUSCH) transmitted from the UE 200 to the second network 10B.

Note that the measurement result reported from the UE 200 to the second network 10B may include a measurement result (RSRP, RSSI, etc.) of the first network 10A, and may include a measurement result (RSRP, RSSI, etc.) of the second network 10B.

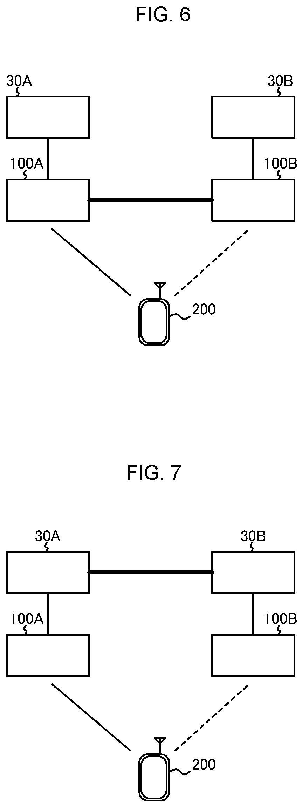

In option 3-1, as shown in Fig. 6, the interface may be an interface between the base station 100A of the first network 10A and the base station 100B of the second network 10B.

In option 3-2, as shown in Fig. 7, the interface may be an interface between an apparatus of the core network 30A of the first network 10A and an apparatus of the core network 30B of the second network 10B.

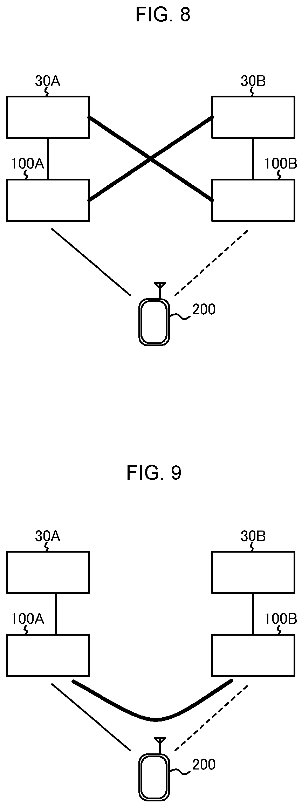

In option 3-3, as shown in Fig. 8, the interface may include an interface between the apparatus of the core network 30A of the first network 10A and the base station 100B of the second network 10B. The interface may include an interface between the base station 100A of the first network 10A and the apparatus of the core network 30B of the second network 10B.

In option 3-4, as shown in Fig. 9, the interface may be an interface relayed by the UE 200 between the first network 10A and the second network 10B. U-Plane may be used in the interface relayed by the UE 200.

In option 3-5, the interface is not particularly defined, and the information regarding the first network 10A and the information regarding the second network 10B may be forwarded according to implementation of the UE 200.

In option 3-6, a reporting timing of the information regarding the first network 10A and the information regarding the second network 10B will be described.

In option 3-6-1, the reporting timing may be a timing requested by a partner. That is, the reporting timing of the information regarding the first network 10A may be a timing requested by the second network 10B. The reporting timing of the information regarding the second network 10B may be a timing requested by the first network 10A.

In option 3-6-2, the reporting timing may be a timing at which a condition is satisfied. The condition may be defined in advance in the radio communication system 10, or may be configured in advance in the radio communication system 10. The condition may be defined by one or more alternatives. Which of the one or more alternatives is to be applied may be indicated by the first network 10A, may be indicated by the second network 10B, or may be specified by various measurement values.

In option 3-6-3, the reporting timing may be a timing at which a timer expires. The timer may be a timer started by reporting the information regarding the first network 10A and the information regarding the second network 10B. That is, the information regarding the first network 10A and the information regarding the second network 10B may be reported periodically.

In option 3-6-4, the reporting timing may be a timing at which operation example 1 or operation example 2 is configured.

In option 3-6-5, the reporting timing may be a timing at which the UE 200 reconnects to the first network 10A, or may be a timing at which the UE 200 reconnects to the second network 10B. That is, the reporting timing may be a timing at which a connection state of the UE 200 is changed. For example, the information regarding the first network 10A may be reported via the interface at a timing at which the UE 200 reconnects to the first network 10A. The information regarding the second network 10B may be reported via the interface at a timing at which the UE 200 reconnects to the second network 10B.

In option 3-6-6, the reporting timing may be a timing at which a measurement result is reported by the UE 200. The information regarding the first network 10A may include the measurement result, and may include information other than the measurement result. The information regarding the second network 10B may include the measurement result, and may include information other than the measurement result.

In option 3-7, contents (hereinafter, reporting contents) of the information regarding the first network 10A and the information regarding the second network 10B will be described.

In option 3-7-1, the reporting contents may include information regarding a quality situation. The information regarding the quality situation may include information regarding one or more elements selected from a Serving cell, a Serving AP, a Non-serving cell, and a Non-serving AP. The information regarding the one or more elements may include one or more pieces of information selected from a received power (RSRP, RSSI, etc.), a received quality (RSRQ (Reference Signal Received Quality)), a CSI (Channel State Indicator), and an amount of interference.

In option 3-7-2, the reporting contents may include information regarding transmission and reception timings. The information regarding the transmission and reception timings may include a TA (Timing Advance).

In option 3-7-3, the reporting contents may include information indicating a congestion situation. The information indicating the congestion situation may include the number of connected UEs, and may include the number of capacities. That is, the information regarding the first network 10A may include the congestion situation (the number of connected UEs, capacity information, etc.) of the base station 100A of the first network 10A. The information regarding the second network 10B may include information (e.g., the number of connected UEs, the number of capacities, etc.) regarding the base station 100B of the second network 10B.

In option 3-7-4, the reporting contents may include information for grasping a configuration of another network. That is, the information regarding the first network 10A may include configuration information (e.g., identification information, geographical position information) of the base station 100A of the first network 10A. The information regarding the second network 10B may include information (e.g., identification information, geographical position information) regarding the base station 100B of the second network 10B.

In operation example 3, two or more options selected from option 3-1 to option 3-7 may be combined.

### (4.4) Operation Example 4

In operation example 4, a case where a subject determining execution of communication with respect to the second network 10B is the network apparatus 50 when a specific condition regarding at least one of a congestion situation and a quality situation of the first network 10A is satisfied will be described.

In the following, the execution of communication with respect to the second network 10B may include a connection establishment operation, and may include a CH/signal change operation. In operation example 4, operation example 1 may be assumed, and operation example 2 may be assumed. As operation example 4, options shown below are conceivable.

In operation example 4-1, a case where the connection establishment operation and the CH/signal change operation are instructed will be described. A node instructing the connection establishment operation and the CH/signal change operation may be referred to as a Primary node. The Primary node may be considered to be a node belonging to the first network 10A, or may be considered to be a node belonging to a network other than the first network 10A. The Primary node may be referred to as a Primary NW, a Primary TP (Transmission Point), a Primary RP (Reception Point), a Primary TRP (Transmission-Reception Point), or a Primary Core. A node for which the connection establishment operation and the CH/signal change operation are instructed may be referred to as a Secondary node. The Secondary node may be considered to be a node belonging to the second network 10B. The Secondary node may be referred to as a Secondary NW, a Secondary TP, a Secondary RP, a Secondary TRP, or a Secondary Core.

In operation example 4-1, a combination of the Primary NW and the Secondary NW may be determined by a priority of combinable networks. The priority may be predetermined in the radio communication system 10, or may be determined by information forwarded by the interface of operation example 3. The combination of the Primary NW and the Secondary NW may be determined by at least one of a quality situation and a congestion situation of each of the combinable networks. The UE 200 may assume that a measurement for determining the combination of the Primary NW and the Secondary NW is instructed. A Capability for determining the combination of the Primary NW and the Secondary NW may be configured in the UE 200 and each network.

In operation example 4-1, the Primary NW and the Secondary NW may be switched at the following timings. The timing may be one timing or a combination of two or more timings selected from a timing at which a timer of the Primary NW or the Secondary NW expires, a timing at which the UE 200 reconnects to the Primary NW or the Secondary NW (a timing at which a connection state of the UE 200 is changed), and a timing requested from the UE 200 (for example, a timing at which a communication service executed by the UE 200 is switched).

As operation example 4-1, options shown below are conceivable.

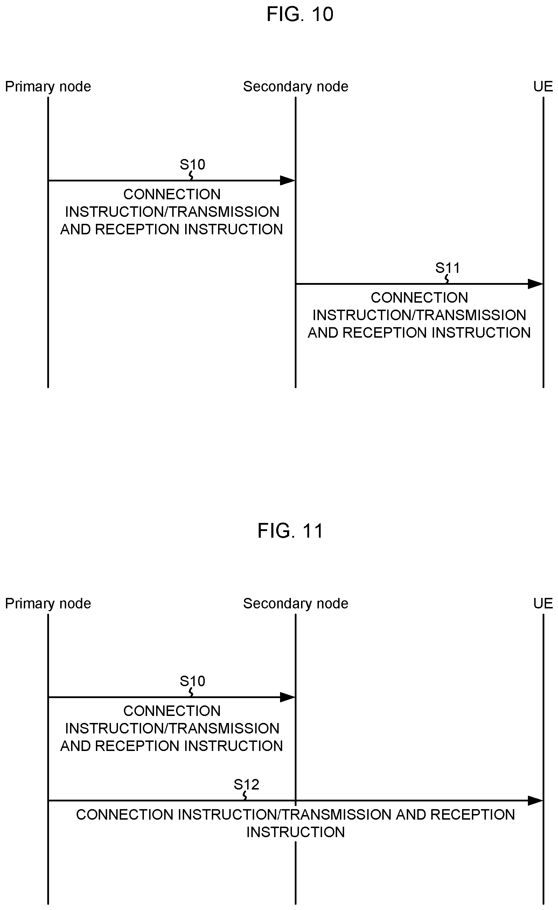

In option 4-1-1, as shown in Fig. 10, in step S10, the Primary node transmits a connection instruction/transmission and reception instruction for the Secondary NW to the Secondary node. The connection instruction is a message instructing a connection establishment operation, and the transmission and reception instruction is a message instructing a CH/signal change operation.

In step S11, the Secondary node transmits the connection instruction/transmission and reception instruction to the UE.

In option 4-1-2, as shown in Fig. 11, in step S10, the Primary node transmits the connection instruction/transmission and reception instruction to the Secondary node.

In step S12, the Primary node transmits the connection instruction/transmission and reception instruction to the UE.

In operation example 4-2, a case where the connection establishment operation and the CH/signal change operation are requested will be described. A node requesting the connection establishment operation and the CH/signal change operation may be referred to as a Primary node, and may be considered to be a node belonging to a network other than the first network 10A. The Primary node may be considered to be a node belonging to the first network 10A. The Primary node may be referred to as a Primary NW, a Primary TP, a Primary RP, a Primary TRP, or a Primary Core. A node for which the connection establishment operation and the CH/signal change operation are requested may be referred to as a Secondary node. The Secondary node may be considered to be a node belonging to the second network 10B. The Secondary node may be referred to as a Secondary NW, a Secondary TP, a Secondary RP, a Secondary TRP, or a Secondary Core.

In operation example 4-2, the UE 200 may be instructed to report information for determining whether to execute the connection establishment operation and the CH/signal change operation. The information for determining whether to execute the connection establishment operation and the CH/signal change operation may include at least a part of the reporting contents described in option 3-7 of operation example 3.

As operation example 4-2, options shown below are conceivable.

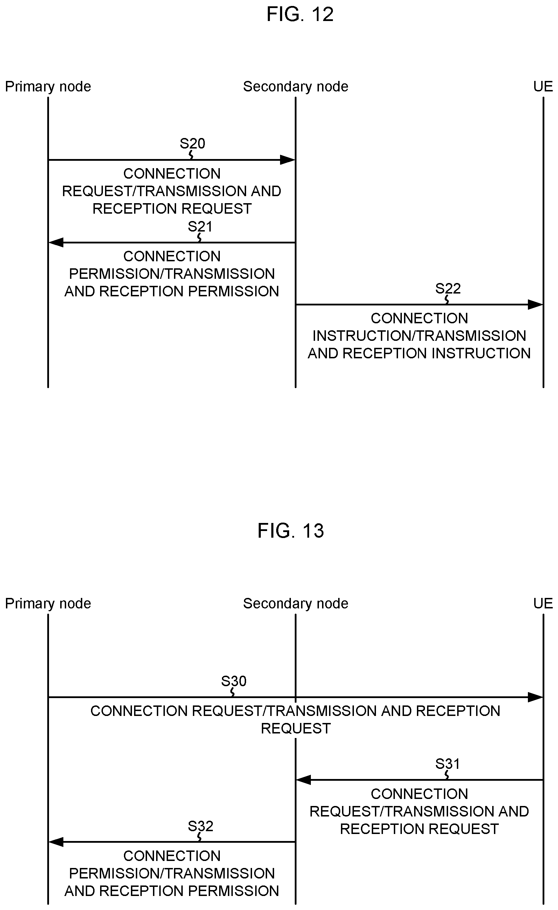

In option 4-2-1, as shown in Fig. 12, in step S20, the Primary node transmits a connection request/transmission and reception request for the Secondary NW to the Secondary node. The connection request is a message requesting a connection establishment operation, and the transmission and reception request is a message requesting a CH/signal change operation.

In step S21, the Secondary node transmits a connection permission/transmission and reception permission for the Secondary NW to the Primary node. The connection permission is a message permitting a connection establishment operation, and the transmission and reception permission is a message permitting a CH/signal change operation.

In step S22, the Secondary node transmits a connection instruction/transmission and reception instruction to the UE.

In option 4-2-2, as shown in Fig. 13, in step S30, the Primary node transmits a connection request/transmission and reception request to the UE.

In step S31, the UE transmits a connection request/transmission and reception request to the Secondary node.

In step S32, the Secondary node transmits a connection permission/transmission and reception permission to the Primary node.

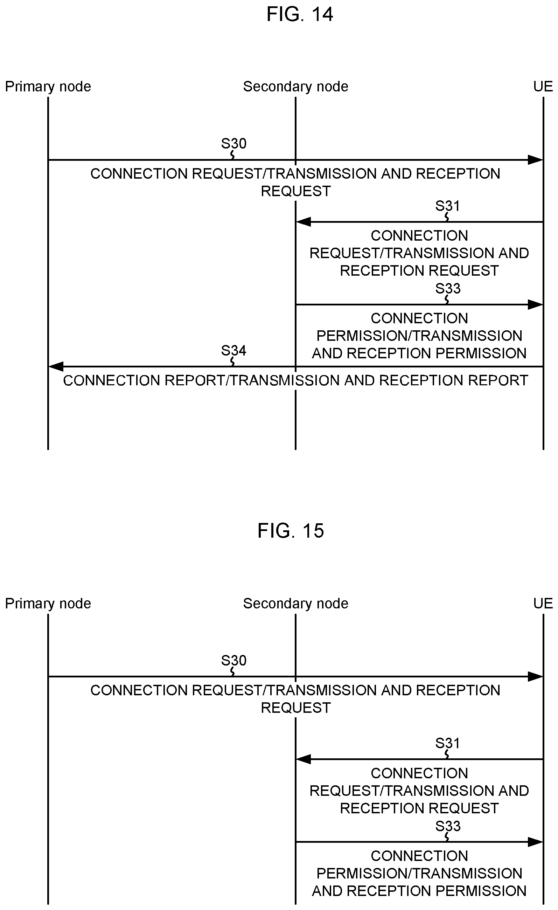

In option 4-2-3, as shown in Fig. 14, in step S30, the Primary node transmits a connection request/transmission and reception request to the UE.

In step S31, the UE transmits a connection request/transmission and reception request to the Secondary node.

In step S33, the Secondary node transmits a connection permission/transmission and reception permission to the UE.

In step S34, the UE transmits a connection report/transmission and reception report to the Primary node. The connection report is a message reporting that a connection establishment operation is permitted, and the transmission and reception report is a message reporting that a CH/signal change operation is permitted.

In option 4-2-4, as shown in Fig. 15, in step S30, the Primary node transmits a connection request/transmission and reception request to the UE.

In step S31, the UE transmits a connection request/transmission and reception request to the Secondary node.

In step S33, the Secondary node transmits a connection permission/transmission and reception permission to the UE.

That is, in option 4-2-4, compared with option 4-2-3, transmission of the connection report/transmission and reception report (step S34 shown in Fig. 14) may be omitted.

As described above, in operation example 4, the UE 200 executes communication with respect to the second network 10B according to an instruction from the first network 10A or the second network 10B.

### (4.5) Operation Example 5

In operation example 5, a case where a subject determining execution of communication with respect to the second network 10B is the UE 200 when a specific condition regarding at least one of a congestion situation and a quality situation of the first network 10A is satisfied will be described.

In the following, the execution of communication with respect to the second network 10B may include a connection establishment operation, and may include a CH/signal change operation. In operation example 5, operation example 1 may be assumed, and operation example 2 may be assumed.

In operation example 5, a case where the connection establishment operation and the CH/signal change operation are requested from the UE 200 will be described. A node that a connection establishment operation and a CH/signal change operation request from the UE 200 may be referred to as a Primary node. The Primary node may be a node belonging to the first network 10A, or may be considered to be a node belonging to a network other than the first network 10A. The Primary node may be referred to as a Primary NW, a Primary TP, a Primary RP, a Primary TRP, or a Primary Core. A node that a connection establishment operation and a CH/signal change operation request from the Primary node may be referred to as a Secondary node. The Secondary node may be considered to be a node belonging to the second network 10B. The Secondary node may be referred to as a Secondary NW, a Secondary TP, a Secondary RP, a Secondary TRP, or a Secondary Core.

In operation example 5, a combination of the Primary NW and the Secondary NW may be determined by a priority of combinable networks. The priority may be predetermined in the radio communication system 10, or may be determined by information forwarded by the interface of operation example 3. The combination of the Primary NW and the Secondary NW may be determined by at least one of a quality situation and a congestion situation of each of the combinable networks. The UE 200 may assume that a measurement for determining the combination of the Primary NW and the Secondary NW is instructed. A Capability for determining the combination of the Primary NW and the Secondary NW may be configured in the UE 200 and each network.

In operation example 5, the Primary NW and the Secondary NW may be switched at the following timings. The timing may be one timing or a combination of two or more timings selected from a timing at which a timer of the Primary NW or the Secondary NW expires, a timing at which the UE 200 reconnects to the Primary NW or the Secondary NW (a timing at which a connection state of the UE 200 is changed), and a timing requested from the UE 200 (for example, a timing at which a communication service executed by the UE 200 is switched).

In operation example 5, the UE 200 may be instructed to report information for determining a combination of the Primary NW or the Secondary NW. The information for determining the combination of the Primary NW or the Secondary NW may include at least a part of the reporting contents described in option 3-7 of operation example 3. A timing at which the UE 200 reports the information may be a periodic timing (Periodic), or may be an aperiodic timing (Aperiodic). The periodic timing (Periodic) may be a timing at which a timer expires. The aperiodic timing (Aperiodic) may be a timing at which a measurement result of the first network 10A falls below a threshold, may be a timing of an initial access to the first network 10A or the second network 10B, or may be a timing at which a connection state of the UE 200 is changed.

As operation example 5, options shown below are conceivable.

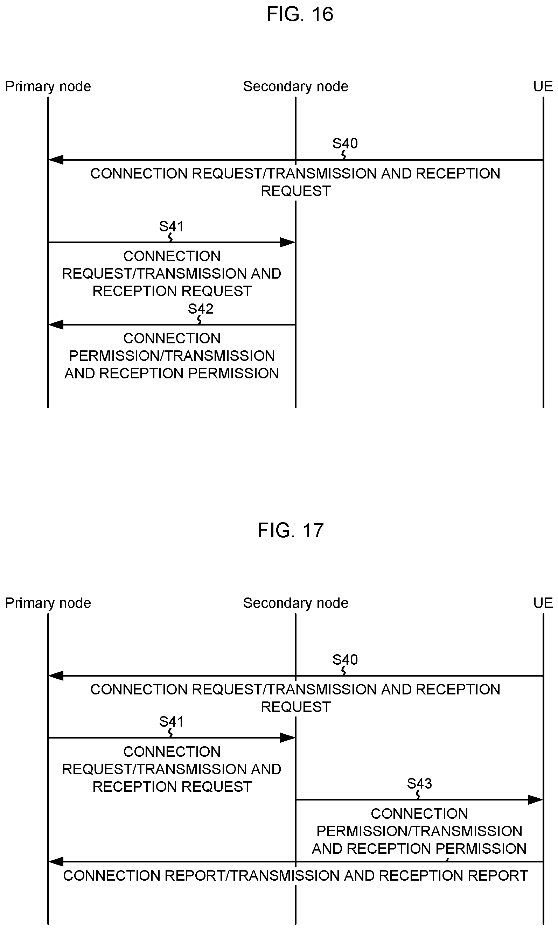

In option 5-1, as shown in Fig. 16, in step S40, the UE transmits a connection request/transmission and reception request for the Primary NW and the Secondary NW to the Primary node.

In step S41, the Primary node transmits a connection request/transmission and reception request for the Secondary NW to the Secondary node.

In step S42, the Secondary node transmits a connection permission/transmission and reception permission for the Secondary NW to the Primary node.

In option 5-2, as shown in Fig. 17, in step S40, the UE transmits a connection request/transmission and reception request for the Primary NW and the Secondary NW to the Primary node.

In step S41, the Primary node transmits a connection request/transmission and reception request for the Secondary NW to the Secondary node.

In step S43, the Secondary node transmits a connection permission/transmission and reception permission for the Secondary NW to the UE.

In step S44, the UE transmits a connection report/transmission and reception report indicating that the connection permission/transmission and reception permission is received in the Secondary NW to the Primary node.

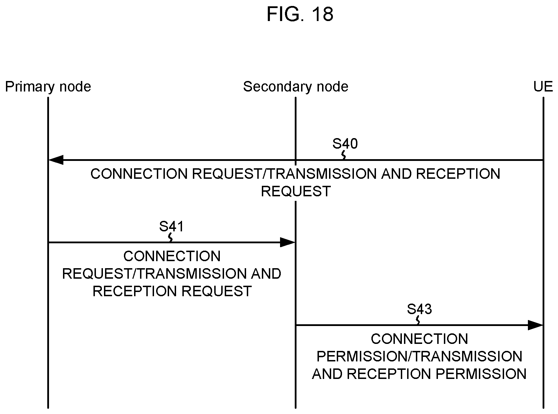

In option 5-3, as shown in Fig. 18, in step S40, the UE transmits a connection request/transmission and reception request for the Primary NW and the Secondary NW to the Primary node.

In step S41, the Primary node transmits a connection request/transmission and reception request for the Secondary NW to the Secondary node.

In step S43, the Secondary node transmits a connection permission/transmission and reception permission for the Secondary NW to the UE.

That is, in option 5-3, compared with option 5-2, transmission of the connection report/transmission and reception report (step S44 shown in Fig. 17) may be omitted.

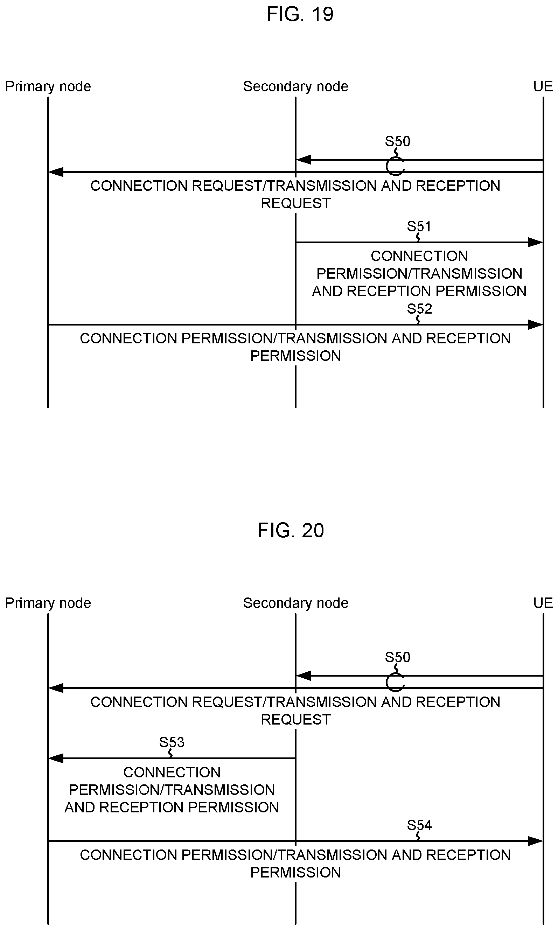

In option 5-4, as shown in Fig. 19, in step S50, the UE transmits a connection request/transmission and reception request for the Primary NW to the Primary node, and transmits a connection request/transmission and reception request for the Secondary NW to the Secondary node.

In step S51, the Secondary node transmits a connection permission/transmission and reception permission for the Secondary NW to the UE.

In step S52, the Primary node transmits a connection permission/transmission and reception permission for the Primary NW to the UE.

In option 5-5, as shown in Fig. 20, in step S50, the UE transmits a connection request/transmission and reception request for the Primary NW to the Primary node, and transmits a connection request/transmission and reception request for the Secondary NW to the Secondary node.

In step S53, the Secondary node transmits a connection permission/transmission and reception permission for the Secondary NW to the Primary node.

In step S54, the Primary node transmits a connection permission/transmission and reception permission for the Primary NW and the Secondary NW to the UE.

As described above, in operation example 5, the UE 200 autonomously requests communication with respect to the second network 10B regardless of an instruction from the first network 10A or the second network 10B.

### (5) Action and Effect

In the embodiment, at least a part of communication assumed in the first network 10A is off-loaded to the second network 10B in order to guarantee a minimum communication quality (e.g., throughput, delay, the number of simultaneous connections, etc.) in the first network 10A. According to such a configuration, a guarantee of a minimum communication quality in the first network 10A can be improved.

In operation example 1, communication executable in the first network 10A and communication executable in the second network 10B are properly used. According to such a configuration, a mechanism for off-loading at least a part of communication assumed in the first network 10A to the second network 10B is clarified, and a guarantee of a minimum communication quality in the first network 10A can be appropriately improved.

In operation example 2, the UE 200 or the network apparatus 50 determines an execution of communication with respect to the second network 10B when a specific condition regarding at least one of a congestion situation and a quality situation of the first network 10A is satisfied. According to such a configuration, an operation of off-loading at least a part of communication assumed in the first network 10A to the second network 10B is executed only in a necessary situation, whereby a guarantee of a minimum communication quality in the first network 10A can be appropriately improved while avoiding complexity of the operation of the UE 200.

In operation example 3, an interface between the first network 10A and the second network 10B is clarified. According to such a configuration, information necessary for operation example 1 or operation example 2 can be forwarded, and the operation of operation example 1 or operation example 2 can be appropriately executed.

In operation example 4, an operation of off-loading at least a part of communication assumed in the first network 10A to the second network 10B is executed under the initiative of the network side. According to such a configuration, a guarantee of a minimum communication quality in the first network 10A can be improved according to a situation of the network side.

In operation example 5, an operation of off-loading at least a part of communication assumed in the first network 10A to the second network 10B is executed under the initiative of the UE 200 side. According to such a configuration, a guarantee of a minimum communication quality in the first network 10A can be improved according to a situation of a communication service executed in the UE 200.

### (6) Other Embodiments

Although the embodiment has been described above, it is obvious to those skilled in the art that the present disclosure is not limited to the description of the embodiment, and various modifications and improvements are possible.

In the above-described disclosure, the case where the first network 10A is a cellular network has been mainly illustrated. However, the above-described disclosure is not limited to this. The first network 10A may be a network of a radio access scheme different from the cellular network (Wi-Fi, Bluetooth, NPN, NFC, WiMAX, UWB, RFID).

In the above-described disclosure, the UE 200 or the network apparatus 50 determines the execution of communication with respect to the second network 10B when a specific condition regarding at least one of a congestion situation and a quality situation of the first network 10A is satisfied. However, the above-described disclosure is not limited to this. The UE 200 or the network apparatus 50 may determine the execution of communication with respect to the second network 10B when a specific condition regarding at least one of a congestion situation and a quality situation of the first network 10A (hereinafter, a first specific condition) is satisfied, and a specific condition regarding at least one of a congestion situation and a quality situation of the second network 10B (hereinafter, a second specific condition) is satisfied. The second specific condition may include a condition that the congestion situation of the second network 10B is better than a reference situation, and may include a condition that the quality situation of the second network 10B is better than a reference situation.

The block configuration diagram (Fig. 4 and Fig. 5) used in the description of the above-described embodiment shows blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining software into the apparatus described above or the plurality of apparatuses described above.

Functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

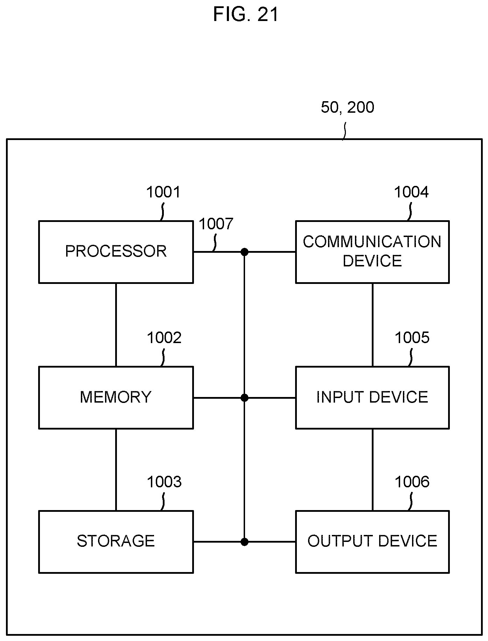

Furthermore, the above-described network apparatus 50 and UE 200 (the apparatuses) may function as a computer that performs the processing of the radio communication method of the present disclosure. Fig. 21 is a diagram illustrating an example of a hardware configuration of the apparatus. As shown in Fig. 21, the apparatus may be configured as a computer apparatus including a processor 1001, a memory 1002, a storage 1003, a communication device 1004, an input device 1005, an output device 1006, a bus 1007, and the like.

Note that in the following description, the word "apparatus" can be read as a circuit, a device, a unit, or the like. The hardware configuration of the apparatus may be configured to include one or a plurality of the apparatuses shown in the Fig., or may be configured not to include some of the apparatuses.

Each functional block of the apparatus (see Fig. 4) is realized by any hardware element of the computer apparatus or a combination of the hardware elements.

Further, each function in the apparatus is realized by causing hardware such as the processor 1001 and the memory 1002 to read predetermined software (program) so that the processor 1001 performs computation and controls communication by the communication device 1004, or controls at least one of reading and writing of data in the memory 1002 and the storage 1003.

The processor 1001 controls the entire computer by operating an operating system, for example. The processor 1001 may be composed of a Central Processing Unit (CPU) including an interface with peripheral devices, a control device, an arithmetic device, a register, and the like.

Further, the processor 1001 reads a program (program code), a software module, data, and the like from at least one of the storage 1003 and the communication device 1004 into the memory 1002, and executes various processes according to these. As the program, a program that causes a computer to execute at least a part of the operations described in the above-described embodiment is used. Furthermore, the various processes described above may be executed by one processor 1001, or may be executed simultaneously or sequentially by two or more processors 1001. The processor 1001 may be implemented by one or more chips. Note that the program may be transmitted from a network via a telecommunication line.

The memory 1002 is a computer-readable recording medium, and may be composed of at least one of, for example, a Read Only Memory (ROM), an Erasable Programmable ROM (EPROM), an Electrically Erasable Programmable ROM (EEPROM), and a Random Access Memory (RAM). The memory 1002 may be called a register, a cache, a main memory (main storage device), or the like. The memory 1002 can store a program (program code), a software module, and the like capable of executing the method according to an embodiment of the present disclosure.

The storage 1003 is a computer-readable recording medium, and may be composed of at least one of, for example, an optical disc such as a Compact Disc ROM (CD-ROM), a hard disk drive, a flexible disk, a magneto-optical disk (for example, a compact disc, a digital versatile disc, a Blu-ray (registered trademark) disc), a smart card, a flash memory (for example, a card, a stick, a key drive), a floppy (registered trademark) disk, and a magnetic strip. The storage 1003 may be called an auxiliary storage device. The above-described recording medium may be, for example, a database, a server, or other appropriate media including at least one of the memory 1002 and the storage 1003.

The communication device 1004 is hardware (transmission/reception device) for performing communication between computers via at least one of a wired network and a wireless network, and is also called, for example, a network device, a network controller, a network card, a communication module, or the like.

The communication device 1004 may be configured to include a highfrequency switch, a duplexer, a filter, a frequency synthesizer, and the like, for example, in order to realize at least one of Frequency Division Duplex (FDD) and Time Division Duplex (TDD).

The input device 1005 is an input device (for example, a keyboard, a mouse, a microphone, a switch, a button, a sensor, etc.) that accepts input from the outside. The output device 1006 is an output device (for example, a display, a speaker, an LED lamp, etc.) that implements output to the outside. Note that the input device 1005 and the output device 1006 may have an integrated configuration (for example, a touch panel).

Further, each device such as the processor 1001 and the memory 1002 is connected by a bus 1007 for communicating information. The bus 1007 may be configured using a single bus, or may be configured using a different bus for each device.

Furthermore, the apparatus may be configured to include hardware such as a microprocessor, a Digital Signal Processor (DSP), an Application Specific Integrated Circuit (ASIC), a Programmable Logic Device (PLD), and a Field Programmable Gate Array (FPGA), and a part or all of each functional block may be realized by the hardware. For example, the processor 1001 may be implemented using at least one of these hardware pieces.

Further, notification of information is by no means limited to the aspects/embodiments described in the present disclosure, and other methods may be used as well. For example, notification of information in the present disclosure may be implemented by using physical layer signaling (for example, Downlink Control Information (DCI), Uplink Control Information (UCI)), higher layer signaling (for example, Radio Resource Control (RRC) signaling, Medium Access Control (MAC) signaling, broadcast information (Master Information Block (MIB), System Information Block (SIB)), and other signals or combinations of these. Also, RRC signaling may be referred to as an "RRC message," and can be, for example, an RRC Connection Setup message, an RRC Connection Reconfiguration message, and so on.

Each aspect/embodiment described in the present disclosure may be applied to at least one of a system using Long Term Evolution (LTE), LTE-Advanced (LTE-A), SUPER 3G, IMT-Advanced, 4th generation mobile communication system (4G), 5th generation mobile communication system (5G), Future Radio Access (FRA), New Radio (NR), W-CDMA (registered trademark), GSM (registered trademark), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), and other appropriate systems, and a next-generation system extended based on these. Further, a plurality of systems may be combined (for example, a combination of at least one of LTE and LTE-A and 5G, etc.) and applied.

The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The specific operation performed by the base station in the present disclosure may be performed by its upper node in some cases. In a network consisting of one or a plurality of network nodes having a base station, it is obvious that various operations performed for communication with a terminal can be performed by at least one of the base station and other network nodes other than the base station (for example, MME or S-GW may be considered, but not limited thereto). Although the case where there is one other network node other than the base station has been illustrated above, it may be a combination of a plurality of other network nodes (for example, MME and S-GW).

Information, signals (information, etc.) can be output from a higher layer (or a lower layer) to a lower layer (or a higher layer). They may be input and output via a plurality of network nodes.

The input or output information may be stored in a specific location (e.g., memory) or managed using management tables. The input or output information may be overwritten, updated, or added. The information that has been output may be deleted. The information that has been input may be transmitted to another apparatus.

The determination may be made by using a value (0 or 1) represented by one bit, by truth-value (Boolean: true or false), or by comparison of numerical values (for example, comparison with a predetermined value).

Each aspect/embodiment described in the present specification may be used independently, may be used in combination, or may be used by switching according to operations. Further, notification of predetermined information (e.g., notification of "is X") is not limited to an explicit notification, and may be performed by an implicit notification (e.g., by not performing notification of the predetermined information).

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL), etc.) or wireless technologies (infrared, microwave, etc.), at least one of these wired line technologies or wireless technologies is included within the definition of the transmission medium.

Information, a signal, or the like, described in the present specification may be represented by using any one of various different technologies. For example, data, an instruction, a command, information, a signal, a bit, a symbol, a chip, or the like, described throughout the present application, may be represented by a voltage, an electric current, electromagnetic waves, magnetic fields, a magnetic particle, optical fields, a photon, or a combination thereof.

It should be noted that a term used in the present specification and/or a term required for understanding of the present specification may be replaced by a term having the same or similar meaning. For example, a channel and/or a symbol may be a signal (signaling). Further, a signal may be a message. Further, the component carrier (CC) may be referred to as a carrier frequency, cell, frequency carrier, or the like.

The terms "system" and "network" used in the present disclosure are used interchangeably.

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical equations using these parameters may differ from those explicitly disclosed in the present disclosure. Because the various channels (e.g., PUCCH, PDCCH) and information elements may be identified by any suitable names, the various names assigned to these various channels and information elements are not used as limitations.

In the present disclosure, the terms such as a "base station (BS)," a "radio base station," a "fixed station," a "NodeB," an "eNB (eNodeB)," a "gNB (gNodeB)," an "access point," a "transmission point," a "reception point," a "transmission/reception point," a "cell," a "sector," a "cell group," a "carrier," a "component carrier," and so on can be used interchangeably. The base station may be referred to as the terms such as a "macro cell," a "small cell," a "femto cell," a "pico cell," and so on.

A base station can accommodate one or a plurality (for example, three) of cells (also called sectors). When a base station accommodates a plurality of cells, the entire coverage area of the base station can be divided into a plurality of smaller areas, and each smaller area can also provide communication services by a base station subsystem (for example, a compact base station for indoor use (Remote Radio Head: RRH)).

The term "cell" or "sector" refers to a part or the whole of the coverage area of at least one of a base station and a base station subsystem that performs communication service in this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases by those skilled in the art.

At least one of a base station and a mobile station may be called a transmission apparatus, a reception apparatus, a communication apparatus, or the like. Note that at least one of a base station and a mobile station may be a device mounted on a moving body, the moving body itself, or the like. The moving body may be a vehicle (for example, a car, an airplane, etc.), a moving body that moves unmanned (for example, a drone, an autonomous driving car, etc.), or a robot (manned type or unmanned type). Note that at least one of a base station and a mobile station includes an apparatus that does not necessarily move during communication operation. For example, at least one of a base station and a mobile station may be an Internet of Things (IoT) device such as a sensor.

Further, the base station in the present disclosure may be read as a mobile station (user terminal, the same applies hereinafter). For example, each aspect/embodiment of the present disclosure may be applied to a configuration in which communication between a base station and a mobile station is replaced with communication between a plurality of mobile stations (for example, may be called Device-to-Device (D2D), Vehicle-to-Everything (V2X), etc.). In this case, the mobile station may have the functions that the base station has. Further, words such as "uplink" and "downlink" may be read as words corresponding to terminal-to-terminal communication (for example, "side"). For example, an uplink channel, a downlink channel, and the like may be read as a side channel.

Similarly, the mobile station in the present disclosure may be read as a base station. In this case, the base station may have the functions that the mobile station has.

A radio frame may be constituted of one or a plurality of periods (frames) in the time domain. Each of one or a plurality of periods (frames) constituting a radio frame may be referred to as a "subframe."

Furthermore, a subframe may be constituted of one or a plurality of slots in the time domain. A subframe may be a fixed time length (for example, 1 ms) independent of numerology.

Numerology may be a communication parameter applied to at least one of transmission and reception of a certain signal or channel. Numerology may indicate at least one of, for example, a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be composed of one or a plurality of symbols (Orthogonal Frequency Division Multiplexing (OFDM) symbols, Single Carrier Frequency Division Multiple Access (SC-FDMA) symbols, etc.) in the time domain. A slot may be a time unit based on numerology.

A slot may include a plurality of mini-slots. Each mini-slot may be composed of one or a plurality of symbols in the time domain. Further, a mini-slot may be called a sub-slot. A mini-slot may be composed of a smaller number of symbols than a slot. A PDSCH (or PUSCH) transmitted in a time unit larger than a mini-slot may be called PDSCH (or PUSCH) mapping type A. A PDSCH (or PUSCH) transmitted using a mini-slot may be called PDSCH (or PUSCH) mapping type B.

A radio frame, a subframe, a slot, a mini-slot, and a symbol all express time units in signal communication. A radio frame, a subframe, a slot, a mini-slot, and a symbol may each be called by other applicable terms.

For example, one subframe may be called a Transmission Time Interval (TTI), a plurality of consecutive subframes may be called a TTI, or one slot or one mini-slot may be called a TTI. That is, at least one of a subframe and a TTI may be a subframe (1 ms) in existing LTE, may be a period shorter than 1 ms (for example, 1 to 13 symbols), or may be a period longer than 1 ms. Note that the unit representing the TTI may be called a slot, a mini-slot, or the like instead of a subframe.

Here, a TTI refers to the minimum time unit of scheduling in radio communication, for example. For example, in LTE systems, a base station performs, for user terminals, scheduling of allocating radio resources (such as a frequency bandwidth and transmit power available for each user terminal) in TTI units. Note that the definition of the TTI is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in LTE Rel. 8-12), a "long TTI," a "normal subframe," a "long subframe," a "slot," or the like. A TTI that is shorter than a normal TTI may be referred to as a "shortened TTI," a "short TTI," a "partial TTI (partial or fractional TTI)," a "shortened subframe," a "short subframe," a "mini-slot," a "sub-slot," a "slot," and so on.

Note that a long TTI (for example, a normal TTI, a subframe, or the like) may be interpreted as a TTI having a time length exceeding 1 ms, and a short TTI (for example, a shortened TTI or the like) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Further, the time domain of an RB may include one or a plurality of symbols, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG)," a "PRB pair," an "RB pair," and so on.

Furthermore, a resource block may be constituted of one or a plurality of resource elements (REs). For example, one RE may correspond to a radio resource field of one subcarrier and one symbol.

A bandwidth part (Bandwidth Part: BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of the one or more wires, cables, or printed electrical connections and, as a number of non-limiting and non-inclusive examples, electromagnetic energy having wavelengths in the radio frequency region, the microwave region, and the light (both visible and invisible) region.

A reference signal may be abbreviated as an "RS," and may be referred to as a "pilot," depending on which standard applies.

The phrase "based on" as used in the present disclosure does not mean "based only on", unless otherwise specified. In other words, the phrase "based on" means both "based only on" and "based at least on".

"Means" included in the configuration of each of the above apparatuses may be replaced by "parts", "circuits", "devices", etc.

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

In the case where the terms "include", "including" and variations thereof are used in the present disclosure, these terms are intended to be comprehensive in the same way as the term "comprising". Further, the term "or" used in the present disclosure is intended not to be an exclusive-OR.

Throughout the present disclosure, for example, during translation, if articles such as a, an, and the in English are added, the present disclosure may include that a noun following these articles is used in plural.

As used herein, the term "determining" may encompasses a wide variety of actions. For example, "determining" may be regarded as judging, calculating, computing, processing, deriving, investigating, looking up (e.g., looking up in a table, a database or another data structure), ascertaining and the like. Also, "determining" may be regarded as receiving (e.g., receiving information), transmitting (e.g., transmitting information), inputting, outputting, accessing (e.g., accessing data in a memory) and the like. Also, "determining" may be regarded as resolving, selecting, choosing, establishing, comparing and the like. That is, "determining" may be regarded as a certain type of action related to determining. Also, "determining" may be read as "assuming", "expecting", "considering", and the like.

In this disclosure, the term "A and B are different" may mean "A and B are different from each other." It should be noted that the term "A and B are different" may mean "A and B are different from C." Terms such as "separated" or "coupled" may be interpreted in the same way as "different".

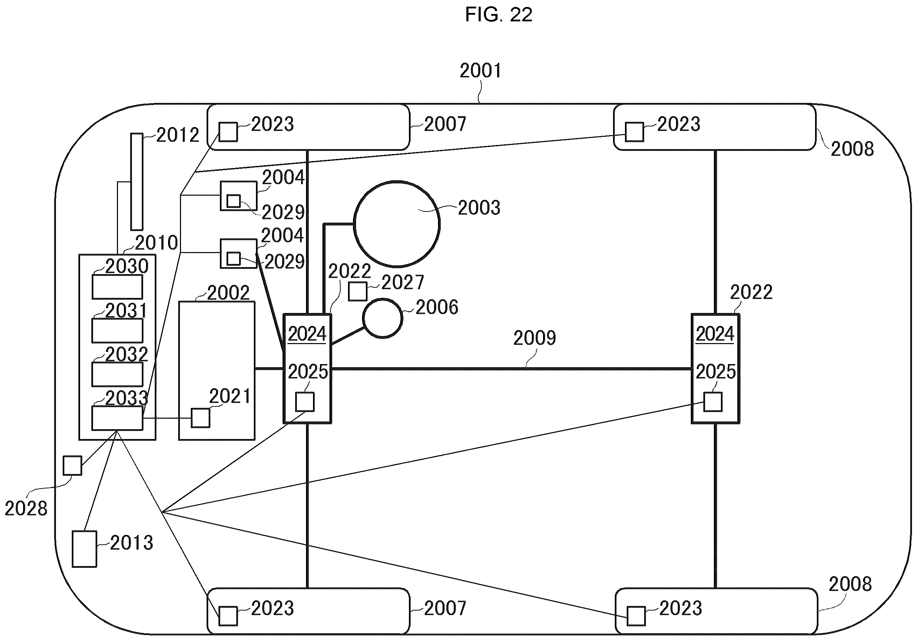

Fig. 22 shows an example of the configuration of the vehicle 2001. As shown in Fig. 22, the vehicle 2001 includes a drive unit 2002, a steering unit 2003, an accelerator pedal 2004, a brake pedal 2005, a shift lever 2006, left and right front wheels 2007, left and right rear wheels 2008, an axle 2009, an electronic control unit 2010, various sensors 2021 to 2029, an information service unit 2012, and a communication module 2013.

The drive unit 2002 is composed of, for example, an engine, a motor, and a hybrid of an engine and a motor.

The steering unit 2003 includes at least a steering wheel and is configured to steer at least one of the front and rear wheels based on the operation of the steering wheel operated by the user.

The electronic control unit 2010 consists of a microprocessor 2031, a memory (ROM, RAM) 2032 and a communication port (IO port) 2033. The electronic control unit 2010 receives signals from various sensors 2021 to 2027 provided in the vehicle. The electronic control unit 2010 may be referred to as an ECU (Electronic Control Unit).

The signals from the various sensors 2021 to 2028 include a current signal from a current sensor 2021 for sensing the current of a motor, a rotation speed signal of a front wheel and a rear wheel acquired by a rotation speed sensor 2022, an air pressure signal of a front wheel and a rear wheel acquired by an air pressure sensor 2023, a vehicle speed signal acquired by a vehicle speed sensor 2024, an acceleration signal acquired by an acceleration sensor 2025, an accelerator pedal depressing amount signal acquired by an accelerator pedal sensor 2029, a brake pedal depressing amount signal acquired by a brake pedal sensor 2026, an operation signal of the shift lever acquired by a shift lever sensor 2027, and a detection signal acquired by an object detection sensor 2028 for detecting obstacles, vehicles, pedestrians, and the like.

The information service unit 2012 comprises various devices such as a car navigation system, an audio system, a speaker, a television, and a radio for providing various information such as driving information, traffic information, and entertainment information, and one or more ECUs for controlling these devices. The information service unit 2012 provides various multimedia information and multimedia services to the occupants of the vehicle 2001 by utilizing information acquired from an external device via the communication module 2013 or the like.

A driver assistance system unit 2030 consists of various devices, such as millimeter-wave radar, LiDAR (Light Detection and Ranging), camera, positioning locator (e.g. GNSS), map information (e.g. high-definition (HD) maps, self-driving car (AV) maps, etc.), gyro system (e.g. IMU (Inertial Measurement Unit), INS (Inertial Navigation System), etc.), AI (Artificial Intelligence) chip, AI processor, which are used to provide functions to prevent accidents or reduce the driver's driving load, and one or more ECUs that control these devices. The driver assistance system unit 2030 also transmits and receives various information via the communication module 2013 to realize a driver assistance function or an automatic driving function.

The communication module 2013 can communicate with the microprocessor 2031 and components of the vehicle 2001 via a communication port. For example, the communication module 2013 transmits and receives data via the communication port 2033 to and from the microprocessor 2031, the memory (ROM, RAM) 2032, and the sensors 2021 to 2028 in the drive unit 2002, the steering unit 2003, the accelerator pedal 2004, the brake pedal 2005, the shift lever 2006, the left and right front wheels 2007, the left and right rear wheels 2008, the axle 2009, and the electronic control unit 2010 in the vehicle 2001.

The communication module 2013 is a communication device that can be controlled by the microprocessor 2031 of the electronic control unit 2010 and can communicate with external devices. For example, it transmits and receives various information to and from external devices via radio communication. The communication module 2013 may be either inside or outside the electronic control unit 2010. The external device may be, for example, a base station, a mobile station, etc.

The communication module 2013 transmits the current signal from the current sensor input to the electronic control unit 2010 to an external device via radio communication. Further, the communication module 2013 also transmits, to an external device via radio communication, a rotation speed signal of a front wheel and a rear wheel acquired by the rotation speed sensor 2022, an air pressure signal of a front wheel and a rear wheel acquired by the air pressure sensor 2023, a vehicle speed signal acquired by the vehicle speed sensor 2024, an acceleration signal acquired by the acceleration sensor 2025, an accelerator pedal depressing amount signal acquired by the accelerator pedal sensor 2029, a brake pedal depressing amount signal acquired by the brake pedal sensor 2026, an operation signal of the shift lever acquired by the shift lever sensor 2027, and a detection signal acquired by the object detection sensor 2028 for detecting obstacles, vehicles, pedestrians, and the like, which are input to the electronic control unit 2010.

The communication module 2013 receives various kinds of information (traffic information, signal information, inter-vehicular distance information, etc.) transmitted from an external device and displays them to the information service unit 2012 provided in the vehicle. The communication module 2013 also stores various information received from external devices in the memory 2032 available by the microprocessor 2031. Based on the information stored in the memory 2032, the microprocessor 2031 may control the drive unit 2002, the steering unit 2003, the accelerator pedal 2004, the brake pedal 2005, the shift lever 2006, the left and right front wheels 2007, the left and right rear wheels 2008, the axle 2009, the sensors 2021 to 2028, etc. provided in the vehicle 2001.

Although the present disclosure has been described in detail above, it is obvious to those skilled in the art that the present disclosure is not limited to the embodiments described in the present disclosure. The present disclosure can be implemented as modifications and variations without departing from the spirit and scope of the present disclosure defined by the description of the scope of claims. Therefore, the description of the present disclosure is for the purpose of illustration, and does not have any restrictive meaning to the present disclosure.

### (Supplementary Note)

The above-described disclosure may be expressed as follows.

The first feature is a terminal comprising: a communication unit that executes communication with a first network and a second network; and a control unit that determines an execution of communication with respect to the second network when a specific condition regarding at least one of a congestion situation and a quality situation of the first network is satisfied.

The second feature is the terminal according to the first feature, wherein the control unit executes the communication with respect to the second network according to an instruction from the first network or the second network.

The third feature is the terminal according to the first feature, wherein the control unit autonomously requests the communication with respect to the second network regardless of an instruction from the first network or the second network.

The fourth feature is a network apparatus comprising: a control unit that determines an execution of communication between a second network and a terminal when a specific condition regarding at least one of a congestion situation and a quality situation of a first network is satisfied; and a transmission unit that transmits an instruction or a request for the execution of the communication between the second network and the terminal to the second network or the terminal.

The fifth feature is a radio communication system comprising: a terminal that executes communication with a first network and a second network; and a network apparatus that executes communication with the terminal or the second network, wherein at least one of the terminal and the network apparatus comprises a control unit that determines an execution of communication between the second network and the terminal when a specific condition regarding at least one of a congestion situation and a quality situation of the first network is satisfied.

The sixth feature is a radio communication method comprising: a step of executing communication with a first network and a second network; and a step of determining an execution of communication with respect to the second network when a specific condition regarding at least one of a congestion situation and a quality situation of the first network is satisfied.

### REFERENCE SIGNS LIST

10 RADIO COMMUNICATION SYSTEM
10A FIRST NETWORK
10B SECOND NETWORK
20A, 20B RADIO ACCESS NETWORK
30A, 30B CORE NETWORK
50 NETWORK APPARATUS
51 RECEPTION UNIT
52 TRANSMISSION UNIT
53 CONTROL UNIT
100A, 100B BASE STATION
200 UE
210 FIRST COMMUNICATION UNIT
220 SECOND COMMUNICATION UNIT
230 CONTROL UNIT
1001 PROCESSOR
1002 MEMORY
1003 STORAGE
1004 COMMUNICATION DEVICE
1005 INPUT DEVICE
1006 OUTPUT DEVICE
1007 BUS
2001 VEHICLE
2002 DRIVE UNIT
2003 STEERING UNIT
2004 ACCELERATOR PEDAL
2005 BRAKE PEDAL
2006 SHIFT LEVER
2007 LEFT AND RIGHT FRONT WHEELS
2008 LEFT AND RIGHT REAR WHEELS
2009 AXLE
2010 ELECTRONIC CONTROL UNIT
2012 INFORMATION SERVICE UNIT
2013 COMMUNICATION MODULE
2021 CURRENT SENSOR
2022 ROTATION SPEED SENSOR
2023 AIR PRESSURE SENSOR
2024 VEHICLE SPEED SENSOR
2025 ACCELERATION SENSOR
2026 BRAKE PEDAL SENSOR
2027 SHIFT LEVER SENSOR
2028 OBJECT DETECTION SENSOR
2029 ACCELERATOR PEDAL SENSOR
2030 DRIVER ASSISTANCE SYSTEM UNIT
2031 MICROPROCESSOR
2032 MEMORY (ROM, RAM)
2033 COMMUNICATION PORT

## Claims

1. A terminal comprising:
a communication unit that executes communication with a first network and a second network; and
a control unit that determines an execution of communication with respect to the second network when a specific condition regarding at least one of a congestion situation and a quality situation of the first network is satisfied.

2. The terminal according to claim 1, wherein
the control unit executes the communication with respect to the second network according to an instruction from the first network or the second network.

3. The terminal according to claim 1, wherein
the control unit autonomously requests the communication with respect to the second network regardless of an instruction from the first network or the second network.

4. A network apparatus comprising:
a control unit that determines an execution of communication between a second network and a terminal when a specific condition regarding at least one of a congestion situation and a quality situation of a first network is satisfied; and
a transmission unit that transmits an instruction or a request for the execution of the communication between the second network and the terminal to the second network or the terminal.

5. A radio communication system comprising:
a terminal that executes communication with a first network and a second network; and
a network apparatus that executes communication with the terminal or the second network, wherein
at least one of the terminal and the network apparatus comprises a control unit that determines an execution of communication between the second network and the terminal when a specific condition regarding at least one of a congestion situation and a quality situation of the first network is satisfied.

6. A radio communication method comprising:
a step of executing communication with a first network and a second network; and
a step of determining an execution of communication with respect to the second network when a specific condition regarding at least one of a congestion situation and a quality situation of the first network is satisfied.
